# EUROPÄISCHE PATENTSCHRIFT

(11) **EP 2 103 846 B1**
(45) Veröffentlichungstag und Bekanntmachung des Hinweises auf die Patenterteilung: **02.07.2014**
(21) Anmeldenummer: 09152517.0
(22) Anmeldetag: 11.02.2009
(51) Int. Cl.: F16H 61/04, F16H 61/70, F16H 63/50, B60W 30/19, B60W 10/06, B60W 10/10

(54) **Verfahren zur Schaltsteuerung eines automatisierten Gruppengetriebes**
Method for controlling the switching of an automated group transmission
Procédé de commande de changement de vitesse d'une boîte de vitesse à plusieurs groupes automatisée

(30) Priorität: 19.03.2008 DE 102008000752; 25.09.2008 DE 102008042345
(43) Veröffentlichungstag der Anmeldung: 23.09.2009
(73) Patentinhaber: ZF Friedrichshafen AG, 88038 Friedrichshafen (DE)
(72) Erfinder: Steinborn, Mario, 88046 Friedrichshafen (DE); Breuer, Jochen, 88069 Tettnang (DE)

(56) Entgegenhaltungen:
- DE-A1- 10 152 857
- DE-A1-102005 002 496
- DE-A1-102007 010 829

## Beschreibung

Die Erfindung betrifft gemäß den Merkmalen des Oberbegriffs des Hauptanspruchs ein Verfahren zur Schaltsteuerung eines automatisierten Gruppengetriebes, das in einem Antriebsstrang eines Kraftfahrzeugs zwischen einem Antriebsmotor und einem Achsantrieb angeordnet ist und mindestens ein mehrstufiges Hauptgetriebe und eine diesem nachgeschaltete Bereichsgruppe umfasst, und bei dem das Hauptgetriebe in Vorgelegebauweise mit mindestens einer mit einer steuerbaren Getriebebremse versehenen Vorgelegewelle ausgeführt ist, die Eingangswelle über eine steuerbare Trennkupplung mit dem Antriebsmotor in Verbindung steht, und das Hauptgetriebe unsynchronisiert sowie die Bereichsgruppe synchronisiert schaltbar ist, wobei bei einer Bereichsschaltung die in dem Hauptgetriebe vor und nach der Schaltung eingelegte Übersetzungsstufe identisch ist. Das Dokument DE 10 2005 002 496 offenbart den nächstliegenden Stand der Technik mit den Merkmalen des Oberbegriffs der unabhängigen Ansprüche 1 und 9.

Gruppengetriebe mit einem mehrstufigen Hauptgetriebe und einer diesem nachgeschalteten Bereichsgruppe sowie gegebenenfalls mit einem dem Hauptgetriebe antriebstechnisch vor- oder nachgeordneten Splitgruppe sind seit längerem bekannt und kommen bevorzugt in Nutzfahrzeugen zur Anwendung. Durch eine beispielsweise zweistufig ausgeführte Splitgruppe mit einem in etwa der Hälfte eines mittleren Übersetzungssprungs zwischen zwei aufeinander folgenden Übersetzungsstufen des Hauptgetriebes entsprechenden Übersetzungssprung werden die Übersetzungssprünge des Hauptgetriebes halbiert und die Anzahl der insgesamt zur Verfügung stehenden Gänge des Gruppengetriebes verdoppelt. Durch eine zumeist zweistufige Bereichsgruppe mit einem in etwa um einen mittleren Übersetzungssprung zwischen zwei aufeinander folgenden Übersetzungsstufen des Hauptgetriebes über dem gesamten Übersetzungssprung des Hauptgetriebes liegenden Übersetzungssprung wird die Spreizung des Gesamtgetriebes in etwa verdoppelt und die Anzahl der insgesamt zur Verfügung stehenden Gänge des Gruppengetriebes nochmals verdoppelt.

Hieraus ergibt sich in Verbindung mit einem dreistufigen Hauptgetriebe (mit drei Vorwärts-Übersetzungsstufen und einer Rückwärts-Übersetzungsstufe) ein 12-gängiges Gruppengetriebe mit insgesamt zwölf Vorwärtsgängen und maximal vier Rückwärtsgängen, und in Verbindung mit einem vierstufigen Hauptgetriebe (mit vier Vorwärts-Übersetzungsstufen und einer Rückwärts-Übersetzungsstufe) ein 16-gängiges Gruppengetriebe mit insgesamt sechzehn Vorwärtsgängen und maximal vier Rückwärtsgängen.

Ein derartiges Gruppengetriebe weist gegenüber einem Einzelgetriebe mit einer vergleichbaren Anzahl von Gängen sowie ähnlicher Gangabstufung und Spreizung deutlich kompaktere Abmessungen und ein geringeres Gewicht auf. Da viele Schaltungen in einem Gruppengetriebe aber den Wechsel von Übersetzungsstufen in mehreren Teilgetrieben erfordern und somit relativ kompliziert ablaufen, sind die meisten bekannten Gruppengetriebe entweder teilautomatisiert oder vollautomatisiert schaltbar ausgebildet.

Aus der als AS-Tronic-Familie der Anmelderin bezeichneten Baureihe automatisierter Schaltgetriebe sind die für mittelschwere Nutzfahrzeuge konzipierten Getriebe der AS-Tronic-mid-Baureihe und die für schwere Nutzfahrzeuge vorgesehenen Getriebe der AS-Tronic-Baureihe jeweils als Gruppengetriebe mit einem mehrstufigen, also mit drei oder vier Vorwärts-Übersetzungsstufen versehenen Hauptgetriebe HG, einer dem Hauptgetriebe HG vorgeschalteten zweistufigen Splitgruppe GV und einer dem Hauptgetriebe HG nachgeschalteten zweistufigen Bereichsgruppe GP ausgebildet. Das Hauptgetriebe HG ist jeweils in Vorgelegebauweise ausgeführt sowie unsynchronisiert, also mit unsynchronisierten Klauenkupplungen schaltbar, und weist im Fall der AS-Tronic-mid-Baureihe eine einzige Vorgelegewelle sowie im Fall der AS-Tronic-Baureihe aus Gründen der Gewichts- und Bauraumoptimierung zwei Vorgelegewellen auf. In beiden Baureihen ist das Hauptgetriebe HG wahlweise in einer Direktgangausführung (i_{HG_min}, = 1) oder in einer Schnellgangausführung (i_{HG_min} < 1) verfügbar. Die Splitgruppe GV ist jeweils als ein Vorgelegegetriebe mit zwei synchronisiert, d.h. über reibsynchronisierte Schaltkupplungen schaltbaren Eingangskonstanten für das Hauptgetriebe ausgebildet. Die Bereichsgruppe GP ist jeweils als ein synchronisiert schaltbares zweistufiges Planetengetriebe mit einer schaltbaren Direktverbindung (i_{GP} = 1) und einer alternativ schaltbaren hohen Übersetzung (i_{GP} » 1) ausgeführt.

Ein typisches Verfahren zur Schaltsteuerung eines Gruppengetriebes ist aus der DE 197 54 726 B4 bekannt. Dieses bekannte Verfahren bezieht sich jedoch auf ein halbautomatisch schaltbares Gruppengetriebe mit einem mehrstufigen manuell schaltbaren Hauptgetriebe H und einer diesem nachgeschalteten Kombination einer automatisiert schaltbaren zweistufigen Splitgruppe S und einer automatisiert schaltbaren zweistufigen Bereichsgruppe R, deren Gang-und Schaltkupplungen alle reibsynchronisiert sind. Das betreffende Verfahren sieht vor, dass bei einem Gangwechsel zunächst das Hauptgetriebe (H), darauf die Splitgruppe S und dann die Bereichsgruppe R in ihre Neutralstellung geschaltet werden, dass dann zunächst die Bereichsgruppe R und darauf die Splitgruppe S in ihre jeweilige Zielübersetzungsstufe geschaltet werden, und dass abschließend das Hauptgetriebe H in die Zielübersetzungsstufe geschaltet wird. Hierdurch ergeben sich schnelle Schaltvorgänge und relativ geringe Schalt- und Belastungskräfte bei der Schaltung der Gang- und Schaltkupplungen der Teilgetriebe.

In der DE 101 52 857 A1 ist dagegen ein Verfahren zur Schaltsteuerung eines automatisierten, d.h. vollautomatisch schaltbaren Gruppengetriebes beschrieben. Dieses bekannte Verfahren bezieht sich auf ein Gruppengetriebe mit einem mehrstufigen klauengeschalteten, d.h. unsynchronisiert schaltbaren Hauptgetriebe, einer diesem vorgeschalteten synchronisierten Splitgruppe mit zwei Übersetzungsstufen, und einer dem Hauptgetriebe nachgeschalteten unsynchronisierten Bereichsgruppe mit zwei Übersetzungsstufen. Dieses Verfahren sieht im wesentlichen vor, dass bei einer Bereichsschaltung, also bei einer einen Wechsel der Übersetzungsstufe der Bereichsgruppe beinhaltenden Schaltung, zunächst die Splitgruppe und die Bereichsgruppe zur Unterbrechung des Kraftflusses jeweils in ihre Neutralstellung geschaltet werden, dass dann das Hauptgetriebe mittels einer Getriebebremse abgebremst wird, und dass eine Führung der Drehzahl des Antriebsmotors auf die Synchrondrehzahl des Zielgangs beginnt. Nach dem Einlegen der Zielübersetzungsstufe des Hauptgetriebes wird die Splitgruppe synchronisiert in ihre Zielübersetzungsstufe geschaltet. Mit Erreichen der Synchrondrehzahl durch den Antriebsmotor wird dann die Zielübersetzungsstufe der Bereichsgruppe eingelegt.

Da sich die vorgenannten Verfahren jeweils auf eine spezielle Ausführungsform eines von dem vorliegend betrachteten Gruppengetriebe abweichenden Gruppengetriebe beziehen, können diese bekannten Verfahren nicht ohne weiteres auf ein automatisiertes Gruppengetriebe übertragen werden, das ein mehrstufiges unsynchronisiertes Hauptgetriebe HG und eine diesem nachgeschaltete synchronisierte Bereichsgruppe GP sowie gegebenenfalls eine dem Hauptgetriebe HG vor- oder nachgeschaltete synchronisierte Splitgruppe GV umfasst. Bei einem derart ausgebildeten automatisierten Gruppengetriebe erfolgt eine Bereichsschaltung üblicherweise derart, dass nach einem Lastabbau des Antriebsmotors und gegebenenfalls zusätzlich nach einem Öffnen der Trennkupplung zunächst das Hauptgetriebe HG in seine Neutralstellung geschaltet wird, dann die Bereichsgruppe GP und bedarfsweise auch eine vorhandene Splitgruppe GV synchronisiert in ihre jeweilige Zielübersetzungsstufe umgeschaltet werden, und dass anschließend das Hauptgetriebe HG fremdsynchronisiert wird, d.h. die Schaltkupplung der betreffenden Zielübersetzungsstufe z.B. mittels einer Getriebebremse und/oder bei zumindest teilweise geschlossener Trennkupplung durch eine entsprechende Drehzahlführung des Antriebsmotors synchronisiert wird, bevor die Zielübersetzungsstufe des Hauptgetriebes HG eingelegt wird.

Im Hinblick auf einen möglichst schnellen und verschleißarmen Schaltungsablauf ist an diesem Verfahrensablauf jedoch nachteilig, dass eine Schaltung innerhalb des Hauptgetriebes HG auch dann erfolgt, wenn die in dem Hauptgetriebe HG vor und nach einer Bereichsschaltung eingelegte Übersetzungsstufe identisch ist, also in dem Hauptgetriebe HG gar kein Wechsel der Übersetzungsstufe stattfindet. Dieses Problem betrifft insbesondere Schaltungen zwischen mehreren Rückwärtsgängen, die bei üblicherweise nur einer vorhandenen Rückwärts-Übersetzungsstufe R des Hauptgetriebes HG durch die Übersetzungsstufen der Bereichsgruppe GP und gegebenenfalls einer vorhandenen Splitgruppe GV gebildet werden. Bei einer Umschaltung der dem Hauptgetriebe HG nachgeschalteten Bereichsgruppe GP tritt bei eingelegter Rückwärts-Übersetzungsstufe R an den zugeordneten Schaltkupplungen zusätzlich das Problem auf, dass die betreffenden Sperrsynchronisierungen bauartbedingt üblicherweise nur bei einer Vorwärtsdrehung der Eingangswelle (Ausgangswelle des Hauptgetriebes) funktionieren und bei einer Rückwärtsdrehung der Eingangswelle nicht oder nur eingeschränkt wirksam sind.

Vor diesem Hintergrund liegt der vorliegenden Erfindung die Aufgabe zugrunde, ein Verfahren zur Schaltsteuerung eines automatisierten Gruppengetriebes der eingangs genannten Art anzugeben, mit dem Bereichsschaltungen, d.h. Bereichshochschaltungen und Bereichsrückschaltungen, bei denen die in dem Hauptgetriebe HG vor und nach der Schaltung eingelegte Übersetzungstufe identisch ist, einfacher, schneller und verschleißärmer durchführbar sind.

Die Lösung dieser Aufgabe erfolgt in Verbindung mit den Merkmalen im Oberbegriff des Anspruchs 1 dadurch, dass während der Bereichsschaltung die in dem Hauptgetriebe HG eingelegte Übersetzungsstufe, z.B. die Rückwärts-Übersetzungsstufe R, eingelegt bleibt, und die Bereichsschaltung mit den folgenden Schritten durchgeführt wird:
S1) Lastabbau durch eine Drehmomentreduzierung des Antriebsmotors,
S2) Auslegen der Istübersetzungsstufe (L; S) der Bereichsgruppe (GP = N),
S3) Fremdsynchronisieren der Zielübersetzungsstufe (S; L) der Bereichsgruppe GP,
S4) Einlegen der Zielübersetzungsstufe (S; L) der Bereichsgruppe GP,
S5) Lastaufbau durch eine Drehmomenterhöhung des Antriebsmotors.

Vorteilhafte und zweckmäßige Ausgestaltungen sowie Weiterbildungen des erfindungsgemäßen Verfahrens sind Gegenstand der Ansprüche 2 bis 8.

Bei dem erfindungsgemäßen Verfahren wird demnach von einem automatisierten Gruppengetriebe ausgegangen, das in einem Antriebsstrang eines Kraftfahrzeugs zwischen einem Antriebsmotor und einem Achsantrieb angeordnet ist und mindestens ein mehrstufiges Hauptgetriebe HG und eine diesem nachgeschaltete, vorzugsweise zweistufig ausgebildete Bereichsgruppe GP umfasst. Das Hauptgetriebe HG ist in Vorgelegebauweise mit mindestens einer mit einer steuerbaren Getriebebremse Br versehenen Vorgelegewelle W_{VG1} ausgeführt, und die Eingangswelle W_{GE} steht über eine steuerbare Trennkupplung K mit dem Antriebsmotor in Verbindung. Während das Hauptgetriebe HG klauengeschaltet, d.h. über unsynchronisierte Schaltkupplungen S1, S2 schaltbar ist, sind die Schaltkupplungen der Bereichsgruppe GP reibsynchronisiert ausgebildet. Optional kann das der Erfindung zu Grunde gelegte Gruppengetriebe auch eine vorzugsweise zweistufig ausgebildete Splitgruppe GV aufweisen, die ebenfalls synchronisiert schaltbar ist und dem Hauptgetriebe HG antriebstechnisch vor- oder nachgeordnet ist.

Bei einem derartigen Gruppengetriebe beinhaltet eine Bereichsschaltung, bei der die in dem Hauptgetriebe HG vor und nach der Schaltung eingelegte Übersetzungsstufe identisch ist, mindestens eine Umschaltung der Bereichsgruppe GP von einer Istübersetzungsstufe in eine Zielübersetzungsstufe, z.B. bei einer Bereichshochschaltung einer zweistufigen Bereichsgruppe GP eine Umschaltung von der Übersetzungsstufe L des Langsamfahrbereichs in die Übersetzungsstufe S des Schnellfahrbereichs.

Damit dies in möglichst einfacher, schneller und verschleißarmer Weise erfolgen kann, ist erfindungsgemäß vorgesehen, dass die zu Beginn der Bereichsschaltung in dem Hauptgetriebe HG eingelegte Übersetzungsstufe während der Bereichsschaltung eingelegt bleibt. Der Ablauf der erfindungsgemäßen Bereichsschaltung sieht vor, dass zunächst ein Lastabbau, d.h. eine Reduzierung des von dem Gruppengetriebe übertragenen Drehmomentes, durch eine Drehmomentreduzierung des Antriebsmotors erfolgt, bevor die Istübersetzungsstufe der Bereichsgruppe GP, z.B. bei einer Bereichshochschaltung die Übersetzungsstufe L des Langsamfahrbereichs, weitgehend lastfrei ausgelegt wird (GP = N). Anschließend wird die Zielübersetzungsstufe der Bereichsgruppe GP, bei einer Bereichshochschaltung also die Übersetzungsstufe S des Schnellfahrbereichs, bezüglich der zugeordneten Schaltkupplung fremdsynchronisiert. Danach wird die Zielübersetzungsstufe der Bereichsgruppe GP weitgehend lastfrei eingelegt, bevor die Bereichsschaltung mit dem durch eine Drehmomenterhöhung des Antriebsmotors erfolgenden Lastaufbau abgeschlossen wird.

Der erfindungsgemäße Verfahrensablauf ist sowohl bei einer Bereichshochschaltung als auch bei einer Bereichsrückschaltung eines Gruppengetriebes mit oder ohne eine dem Hauptgetriebe vor- oder nachgeschaltete Splitgruppe GV anwendbar. In der vorbeschriebenen Form handelt es sich um die einfachste Verfahrensvariante, bei der die Trennkupplung K während der Schaltung geschlossen bleibt, und eine gegebenenfalls vorhandene Splitgruppe GV nicht umgeschaltet wird.

Durch das Nicht-Schalten des Hauptgetriebes HG, das nicht durchgeführte Aus- und -Einrücken der Trennkupplung K, und das Fremdsynchronisieren der Bereichsgruppe ergibt sich ein besonders einfacher sowie schneller Schaltvorgang. Zudem werden die entsprechenden Bauteile, wie die Schaltkupplungen der Teilgetriebe HG und GP, die Reibungselemente der Trennkupplung K sowie die Schaltsteller der Teilgetriebe HG, GP und der Kupplungssteller der Trennkupplung K geschont, was zu einer erhöhten Gebrauchsdauer des Gruppengetriebes führt. Das erfindungsgemäße Verfahren kommt bevorzugt bei einer Schaltung zwischen zwei Rückwärtsgängen zur Anwendung, d.h. bei in dem Hauptgetriebe HG eingelegter Rückwärts-Übersetzungsstufe R, in der die Sperrsynchronisierungen der Bereichsgruppe GP zumeist nicht wirksam sind. Das erfindungsgemäße Verfahren kann aber bei erfüllter Ausgangsbedingung, also bei einer in dem Hauptgetriebe HG vor und nach einer Bereichsschaltung identischen Übersetzungsstufe, auch bei einer Bereichsschaltung mit einer in dem Hauptgetriebe HG eingelegten Vorwärts-Übersetzungsstufe angewendet werden. Dies ist z.B. zur Schonung der unsynchronisierten Schaltkupplungen des Hauptgetriebes HG sowie zur Entlastung und Unterstützung der Synchronisierungen der Schaltkupplungen der Bereichsgruppe GP, insbesondere bei Kälte, bei verschlissenen Synchronisierungen oder bei aus anderen Gründen auftretenden Schaltproblemen sinnvoll.

Der Lastabbau in dem Gruppengetriebe wird zweckmäßig dadurch beschleunigt und verstärkt, dass nach oder während der Drehmomentreduzierung des Antriebsmotors die Trennkupplung K zumindest teilweise ausgerückt wird (0 ≤ K < 1).

Wenn die Trennkupplung K während einer Bereichsschaltung aber ganz oder teilweise ausgerückt worden ist (0 ≤ K < 1), so ist spätestens vor der Drehmomenterhöhung des Antriebsmotors (S5) zum Drehmomentaufbau das vollständige Einrücken der Trennkupplung K erforderlich (K = 1), was auch durchgeführt wird.

Bei einer Bereichshochschaltung erfolgt die Fremdsynchronisierung (S3) der Zielübersetzungsstufe der Bereichsgruppe GP bevorzugt mittels einer entsprechenden Betätigung der Getriebebremse (Br > 0).

Dagegen erfolgt die Fremdsynchronisierung (S3) der Zielübersetzungsstufe der Bereichsgruppe GP bei einer Bereichsrückschaltung zweckmäßig mittels einer entsprechenden Drehzahlführung des Antriebsmotors, bedarfsweise, d.h. bei geöffneter Trennkupplung (0 ≤ K < 1), in Verbindung mit einem zumindest teilweisen Einrücken der Trennkupplung (0 < K ≤ 1).

Wenn bei einer der vorgenannten Bereichsschaltungen, d.h. bei einer Bereichshochschaltung oder einer Bereichsrückschaltung, diese eine Umschaltung einer dem Hauptgetriebe HG vor- oder nachgeschalteten, synchronisiert schaltbaren Splitgruppe GV beinhaltet, so erfolgt die Umschaltung der Splitgruppe GV von der Istübersetzungsstufe in die Zielübersetzungsstufe bevorzugt unmittelbar nach dem Auslegen (S2) der Istübersetzungsstufe der Bereichsgruppe GP.

Bei einer entsprechenden Bereichshochschaltung, die eine Umschaltung einer dem Hauptgetriebe HG vor- oder nachgeschalteten synchronisiert schaltbaren Splitgruppe GV beinhaltet, ist es jedoch alternativ dazu auch möglich, dass die Istübersetzungsstufe der Splitgruppe GV unmittelbar nach dem Auslegen (S2) der Istübersetzungsstufe der Bereichsgruppe GP zunächst nur ausgelegt wird, und dass die Zielübersetzungsstufe der Splitgruppe GV, bedarfsweise, d.h. bei einer nicht vollständig ausgerückten Trennkupplung (0 < K ≤ 1), in Verbindung mit einem unmittelbar vorhergehenden vollständigen Ausrücken der Trennkupplung (K = 0), und in Verbindung mit einem unmittelbar nachfolgenden vollständigen Einrücken der Trennkupplung (K = 1) dann vor der Drehmomenterhöhung des Antriebsmotors (S5) zum Lastaufbau eingelegt wird.

Zur Beschleunigung des Verfahrensablaufs kann in den beiden vorbeschriebenen Verfahrensvarianten das Auslegen der Istübersetzungsstufe der Splitgruppe GV jeweils auch zeitgleich mit dem Auslegen der Istübersetzungsstufe der Bereichsgruppe GP erfolgen.

Unter dem Antriebsmotor soll hier sowohl ein einzelner Antriebsmotor verstanden werden können, als auch eine Anordnung von mehreren Antriebsmotoren, welche als Hybridantrieb mit der Eingangswelle des automatisierten Gruppengetriebes mittelbar oder unmittelbar in Verbindung stehen. Der Hybridantrieb kann beispielsweise einen Verbrennungsmotor und einen Elektromotor umfassen, welche einzeln oder gemeinsam als Antriebsmotor betrieben werden können.
Abhängig von der konstruktiven Ausführung der Schaltelemente des Gruppengetriebes kann es beim Einlegen der Zielübersetzungsstufe der Bereichsgruppe zu Problemen kommen, die ein sicheres Einlegen der Zielübersetzungsstufe der Bereichsgruppe verhindern.

Um das Einlegen der Zielübersetzungsstufe der Bereichsgruppe zu verbessern, wird in einer vorteilhaften Weiterbildung der Erfindung zum Fremdsynchronisieren der Zielübersetzungsstufe der Bereichsgruppe für die Zieldrehzahl der Zielübersetzungsstufe ein Offsetwert vorgegeben, um welchen die Zieldrehzahl korrigiert wird.

Nach einer vorteilhaften Weiterbildung der Erfindung wird zum Fremdsynchronisieren der Zielübersetzungsstufe der Bereichsgruppe bei der Ausführung der Bereichsschaltung für die Zieldrehzahl der Zielübersetzungsstufe ein derartiger Offsetwert vorgegeben, dass beim Fremdsynchronisieren eine Sperrwirkung gegeben ist, und zwar sowohl bei einer Hochschaltung als auch bei einer Rückschaltung, sei es in Rückwärtsfahrt oder in Vorwärtsfahrt.

Hierzu wird bei einer als Hochschaltung auszuführenden Bereichsschaltung in Rückwärtsfahrt ein negativer Offsetwert vorgegeben, so dass die Zieldrehzahl der Zielübersetzungsstufe durch den Offsetwert verringert wird. Bei einer Hochschaltung in Vorwärtsfahrt wird hingegen ein positiver Offsetwert vorgegeben, so dass bei der Korrektur der Zieldrehzahl durch den Offsetwert dieselbe vergrößert wird. Das Fremdsynchronisieren bei der Ausführung einer Hochschaltung als Gruppenschaltung erfolgt unter entsprechender Betätigung der Getriebebremse Br.

Soll als Bereichsschaltung eine Rückschaltung in Rückwärtsfahrt ausgeführt werden, so wird zur Gewährleistung einer Sperrwirkung beim Fremdsynchronisieren ein positiver Offsetwert vorgegeben, durch den die Zieldrehzahl vergrößert wird. Bei einer Rückschaltung in Vorwärtsfahrt wird hingegen ein negativer Offsetwert vorgegeben, durch den die Zieldrehzahl verringert wird. Bei einer Rückschaltung erfolgt das Fremdsynchronisieren durch eine entsprechende Drehzahlnachführung des Antriebsmotors.

Die Offsetwerte, die bei der Hochschaltung oder Rückschaltung in Rückwärtsfahrt oder in Vorwärtsfahrt zur Korrektur der Zieldrehzahl verwendet werden, weisen vorzugsweise einen Betrag zwischen 10 Umdrehungen/Minute und 100 Umdrehungen/Minute, insbesondere einen Betrag zwischen 20 Umdrehungen/Minute und 50 Umdrehungen/Minute, auf. Mit solchen Offsetwerten kann sichergestellt werden, dass eine Synchronisierung, nämlich eine Sperrwirkung derselben, beim Einlegen der Zielübersetzungsstufe der Bereichsgruppe korrekt wirksam ist.

Nach einer weiteren vorteilhaften Weiterbildung der Erfindung wird zum Fremdsynchronisieren der Zielübersetzungsstufe die Zieldrehzahl der Zielübersetzungsstufe durch den Offsetwert derart korrigiert, dass beim Fremdsynchronisieren keine Sperrwirkung gegeben ist.

Falls es gewünscht ist, dass beim Fremdsynchronisieren keine Sperrwirkung gegeben ist, dass also beim Einlegen der Zielübersetzungsstufe der Bereichsgruppe die Synchronisierung sofort entsperrt, ist es möglich, die oben beschriebenen Offsetwerte entsprechend umzukehren. In diesem Fall würde dann bei einer Hochschaltung in Rückwärtsfahrt ein positiver Offsetwert zur Vergrößerung der Zieldrehzahl bzw. bei einer Hochschaltung in Vorwärtsfahrt ein negativer Offsetwert zur Verringerung der Zieldrehzahl vorgegeben. Ebenso würden für eine Rückschaltung die Offsetwerte entsprechend umgedreht.

Beim Einlegen der Zielübersetzungsstufe der Bereichsgruppe wirken dann, wenn die Vorschaltgruppe und das Hauptgetriebe eingelegt sind bzw. eingelegt bleiben, resultierend aus großen Massenträgheiten von der Kupplung zur Hauptwelle des Gruppengetriebes große Kräfte, die dem Synchronisieren entgegenwirken. Zur Verringerung dieser Kräfte und damit zur Verringerung der Belastung durch die Synchronisierung und der zur Synchronisierung benötigten Zeit wird nach einer Weiterbildung der Erfindung vorgeschlagen, kurz vor und/oder während des Einlegens der Zielübersetzungsstufe der Bereichsschaltung der Bereichsgruppe die Vorschaltgruppe bzw. Splitgruppe auszulegen und nach dem Einlegen der Zielübersetzungsstufe in der Bereichsgruppe die Splitgruppe wieder einzulegen.

In diesem Fall bleibt dann während der gesamten Bereichsschaltung im Hauptgetriebe die Übersetzungsstufe eingelegt, nämlich während des Lastabbaus, des Auslegens der Istübersetzungsstufe, des Fremdsynchronisierens, des Einlegens der Zielübersetzungsstufe und des Lastaufbaus.

Alternativ ist es auch möglich, dass nur während des Lastaufbaus, des Auslegens der Istübersetzungsstufe und des Fremdsynchronisierens der Zielübersetzungsstufe der Bereichsschaltung im Hauptgetriebe die Übersetzungsstufe eingelegt bleibt, und dass zur Einschaltunterstützung kurz vor und/oder während des Einlegens der Zielübersetzungsstufe der Bereichsschaltung das Hauptgetriebe ausgelegt und nach dem Einlegen der Zielübersetzungsstufe das Hauptgetriebe wieder eingelegt wird. Liegen am Hauptgetriebe zu diesem Zeitpunkt keine Synchronbedingungen vor, so muss das Hauptgetriebe zuerst wieder synchronisiert werden. Dies kann mit der Getriebebremse und/oder dem Antriebsmotor erfolgen.

Somit kann eine hohe Einschaltsicherheit für die Bereichsgruppe beim Einlegen der Zielübersetzungsstufe realisiert werden. Die Schaltzeiten können verkürzt werden. Die Lebensdauer der Bereichsgruppe kann vergrößert werden, da dieselbe einer geringeren Belastung ausgesetzt ist. Mit einer in der Bereichsgruppe z. B. nur in Vorwärtsfahrt wirksamen Synchronisierung können mit dem erfindungsgemäßen Verfahren auch Bereichssehaltungen in Rückwärtsfahrt sicher und schonend ausgeführt werden.

Zur weiteren Verdeutlichung der Erfindung ist der Beschreibung eine Zeichnung mit Ausführungsbeispielen beigefügt. In dieser zeigt
- Fig. 1: einen bevorzugten Ablauf einer Bereichshochschaltung nach dem erfindungsgemäßen Verfahren in Form eines vereinfachten Zeitdiagramms,
- Fig. 2: einen bevorzugten Ablauf einer Bereichsrückschaltung nach dem erfindungsgemäßen Verfahren in Form eines vereinfachten Zeitdiagramms, und
- Fig. 3: den schematischen Aufbau eines Gruppengetriebes, bei dem das Verfahren gemäß der Erfindung anwendbar ist.

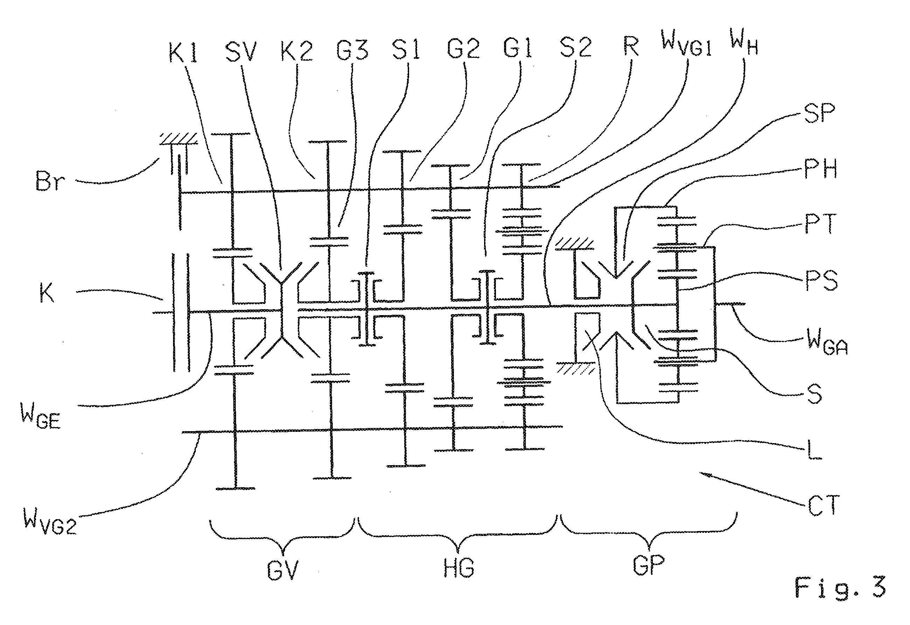

In Fig. 3 ist beispielhaft ein Gruppengetriebe CT dargestellt, bei dem das erfindungsgemäße Verfahren anwendbar ist. Das Gruppengetriebe CT umfasst ein Hauptgetriebe HG, eine diesem antriebstechnisch vorgeschaltete Vorschaltgruppe GV sowie eine dem Hauptgetriebe HG nachgeschaltete Bereichsgruppe GP und entspricht in seinem Aufbau einer Ausführung eines an sich bekannten Gruppengetriebes der AS-Tronic-Baureihe.

Das Hauptgetriebe HG ist als Direktganggetriebe in Vorgelegebauweise ausgeführt und weist eine Hauptwelle W_{H} und zwei Vorgelegewellen W_{VG1}, W_{VG2} auf, wobei die erste Vorgelegewelle W_{VG1} mit einer steuerbaren Getriebebremse Br versehen ist. Das Hauptgetriebe HG ist mit drei Übersetzungsstufen G1, G2 und G3 für die Vorwärtsfahrt und einer Übersetzungsstufe R für die Rückwärtsfahrt dreistufig ausgebildet. Die Losräder der Übersetzungsstufen G1, G2, R sind jeweils drehbar auf der Hauptwelle W_{H} gelagert und über zugeordnete Klauenkupplungen schaltbar. Die zugeordneten Festräder sind drehfest auf den Vorgelegewellen W_{VG1}, W_{VG2} angeordnet. Die als Direktgang ausgebildete höchste Übersetzungsstufe G3 ist über eine Direktschaltkupplung schaltbar. Die Schaltkupplungen der Übersetzungsstufen G3 und G2 sowie die Schaltkupplungen der Übersetzungsstufen G1 und R sind jeweils in einem gemeinsamen Schaltpaket S1 bzw. S2 zusammengefasst.

Die Vorschaltgruppe GV ist zweistufig ausgebildet und ebenfalls in Vorgelegebauweise ausgeführt, wobei die beiden Übersetzungsstufen K1, K2 der Vorschaltgruppe GV zwei schaltbare Eingangskonstante des Hauptgetriebes HG bilden. Durch eine geringe Übersetzungsdifferenz der beiden Übersetzungsstufen K1, K2 ist die Vorschaltgruppe GV als Splitgruppe ausgelegt. Das Losrad der ersten Übersetzungsstufe K1 ist drehbar auf der Eingangswelle W_{GE} gelagert, die über eine steuerbare Trennkupplung K mit einem nicht abgebildeten, beispielsweise als Verbrennungsmotor ausgebildeten Antriebsmotor in Verbindung steht. Das Losrad der zweiten Übersetzungsstufe K2 ist drehbar auf der Hauptwelle W_{H} gelagert. Die Festräder beider Übersetzungsstufen K1, K2 sind jeweils drehfest auf den eingangsseitig verlängerten Vorgelegewellen W_{VG1}, W_{VG2} des Hauptgetriebes HG angeordnet. Die synchronisiert ausgebildeten Schaltkupplungen der Vorschaltgruppe GV sind in einem gemeinsamen Schaltpaket SV zusammengefasst.

Die antriebstechnisch dem Hauptgetriebe HG nachgeordnete Bereichsgruppe GP ist ebenfalls zweistufig ausgebildet, jedoch in Planetenbauweise mit einem einfachen Planetenradsatz ausgeführt. Das Sonnenrad PS ist drehfest mit der ausgangsseitig verlängerten Hauptwelle W_{H} des Hauptgetriebes HG verbunden. Der Planetenträger PT ist drehfest mit der Ausgangswelle W_{GA} des Gruppengetriebes CT gekoppelt. Das Hohlrad PH steht mit einem Schaltpaket SP mit zwei synchronisierten Schaltkupplungen in Verbindung, durch welche die Bereichsgruppe GP wechselweise durch die Verbindung des Hohlrades PH mit einem feststehenden Gehäuseteil in eine Langsamfahrstufe L und durch die Verbindung des Hohlrades PH mit der Hauptwelle W_{H} bzw. dem Sonnenrad PS in eine Schnellfahrstufe S schaltbar ist.

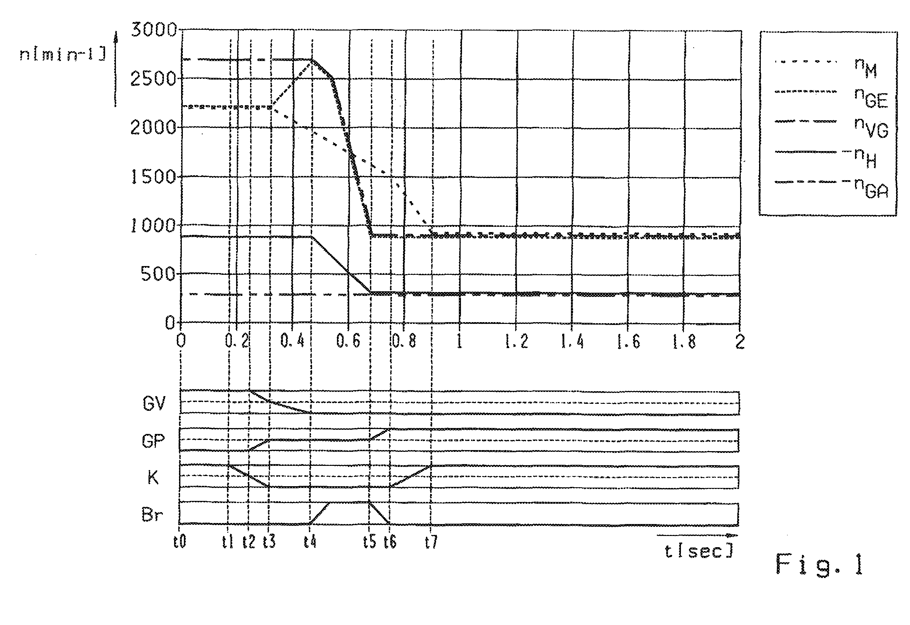

Nachfolgend wird beispielhaft ein erfindungsgemäßer Ablauf einer bei dem Gruppengetriebe CT nach Fig. 3 durchführbaren Bereichshochschaltung anhand der Diagramme von Fig. 1 erläutert. Im oberen Teil von Fig. 1 sind die Zeitverläufe der Drehzahl n_{M} des Antriebsmotors, der Drehzahl n_{GE} der Eingangswelle W_{GE}, der Drehzahl n_{VG} der ersten Vorgelegewelle W_{VG1}, der Drehzahl n_{H} der Hauptwelle W_{H}, und der Drehzahl n_{GA} der Ausgangswelle W_{GA} bis zum Ende der Schaltung abgebildet. Im unteren Teil von Fig. 1 sind schematisch die Betätigungsvorgänge der Getriebeelemente dargestellt, unter der Bezeichnung GV Schaltvorgänge innerhalb der Splitgruppe GV, d.h. das Ein-und Auslegen der Übersetzungsstufen K1 und K2, unter GP Schaltvorgänge innerhalb der Splitgruppe GP, d.h. das Ein- und Auslegen der Langsamfahrstufe L und der Schnellfahrstufe S, unter K die Betätigung, d.h. das Ein- und Ausrücken der Trennkupplung K, und unter Br eine Betätigung, d.h. das Schließen und Öffnen der Getriebebremse Br.

Die in Fig. 1 dargestellte Bereichshochschaltung wird bei Rückwartsfahrt, d.h. bei in dem Hauptgetriebe HG eingelegter Rückwärts-Übersetzungsstufe R durchgeführt, wobei die Rückwärts-Übersetzungsstufe R während des Schaltvorgangs eingelegt bleibt. Zur Reduzierung des Übersetzungssprungs umfasst die Bereichshochschaltung eine Hochschaltung der Bereichsgruppe GP von der Langsamfahrstufe L in die Schnellfahrstufe S und eine Rückschaltung der Splitgruppe von der "schnellen" Eingangsübersetzungsstufe K2 in die "langsame" Eingangsübersetzungsstufe K1.

Zum Zeitpunkt t0 beginnt der Lastabbau durch eine Drehmomentreduzierung des Antriebsmotors, die spätestens zum Zeitpunkt t2 abgeschlossen ist. Parallel dazu wird, beginnend zum Zeitpunkt t1, die Trennkupplung K vorgeöffnet, d.h. bis oberhalb der Schlupfgrenze ausgerückt. Zum Zeitpunkt t2 wird zunächst die Istübersetzungsstufe L der Bereichsgruppe GP ausgelegt, d.h. die Bereichsgruppe GP in Neutral geschaltet (GP = N). In etwa zeitgleich wird auch die Istübersetzungsstufe K2 der Splitgruppe GV ausgelegt (GV = N), und die Trennkupplung K vollständig ausgerückt (K = 0). Anschließend wird zwischen den Zeitpunkten t3 und t4 die Zielübersetzungsstufe K1 der Splitgruppe GV synchronisiert und eingelegt.

Danach wird durch eine entsprechende Betätigung der Getriebebremse Br zwischen den Zeitpunkten t4 und t6 die Vorgelegewelle W_{VG1} sowie die mit dieser über die eingelegte Istübersetzungsstufe R des Hauptgetriebes HG verbundene Hauptwelle W_{H} abgebremst und damit die Zielübersetzungsstufe S der Bereichsgruppe GP fremdsynchronisiert. Mit Erreichen der Synchrondrehzahl an der entsprechenden Schaltkupplung (SP) zum Zeitpunkt t5 wird die Zielübersetzungsstufe S der Bereichsgruppe GP eingelegt. Nachfolgend wird die Trennkupplung K zwischen den Zeitpunkten t6 und t7 wieder vollständig eingerückt, bevor der Lastaufbau durch eine Drehmomenterhöhung des Antriebsmotors erfolg

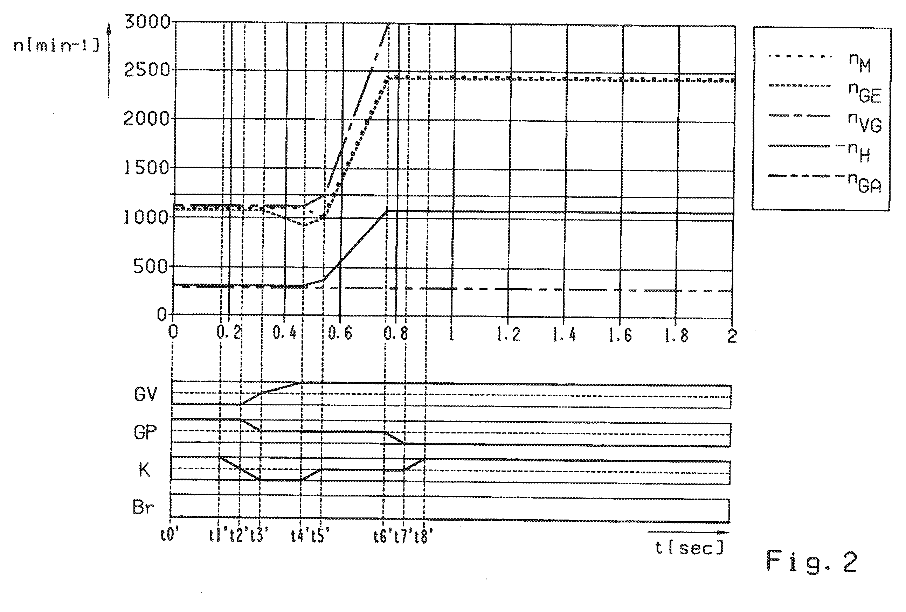

Ein erfindungsgemäßer Ablauf einer bei dem Gruppengetriebe CT nach Fig. 3 durchgeführten Bereichsrückschaltung wird nachfolgend anhand der Diagramme von Fig. 2 erläutert, bei der dieselbe Darstellungsweise wie in Fig. 1 verwendet wird.

Die in Fig. 2 dargestellte Bereichsrückschaltung wird ebenfalls bei Rückwärtsfahrt, d.h. bei in dem Hauptgetriebe HG eingelegter Rückwärts-Übersetzungsstufe R durchgeführt, wobei die Rückwärts-Übersetzungsstufe R während des Schaltvorgangs eingelegt bleibt. Zur Reduzierung des Übersetzungssprungs umfasst die Bereichshochschaltung eine Rückschaltung der Bereichsgruppe GP von der Schneilfahrstufe S in die Langsamfahrstufe L und eine Hochschaltung der Splitgruppe von der "langsamen" Eingangsübersetzungsstufe K1 in die "schnelle" Eingangsübersetzungsstufe K2.

Zum Zeitpunkt t0' beginnt der Lastabbau durch eine Drehmomentreduzierung des Antriebsmotors, die spätestens zum Zeitpunkt t2' abgeschlossen ist. Parallel dazu wird, beginnend zum Zeitpunkt t1', die Trennkupplung K zunächst teilweise ausgerückt. Zwischen den Zeitpunkten t2' und t3' wird die Istübersetzungsstufe S der Bereichsgruppe GP ausgelegt, d.h. die Bereichsgruppe GP in ihr Neutralstellung geschaltet (GP = N). In etwa zeitgleich wird auch die Istübersetzungsstufe K1 der Splitgruppe GV ausgelegt (GV = N) und die Trennkupplung K vollständig ausgerückt (K = 0). Anschließend wird zwischen den Zeitpunkten t3' und t4' die Zielübersetzungsstufe K2 der Splitgruppe GV synchronisiert und eingelegt. Anschließend wird die Trennkupplung K zumindest teilweise wieder eingerückt und danach, ab dem Zeitpunkt t5', durch eine entsprechende Drehzahlführung des Antriebsmotors die Zielübersetzungsstufe L der Bereichsgruppe GP fremdsynchronisiert. Mit Erreichen der Synchrondrehzahl an der entsprechenden Schaltkupplung (SP) zum Zeitpunkt t6' wird die Zielübersetzungsstufe L der Bereichsgruppe GP eingelegt. Nachfolgend wird die Trennkupplung K ab dem Zeitpunkt t7' vollständig eingerückt, bevor ab dem Zeitpunkt t8' der Lastaufbau durch eine Drehmomenterhöhung des Antriebsmotors erfolgt.

Durch die in Fig. 1 und Fig. 2 dargestellten Verfahrensabläufe ergeben sich relativ einfach steuerbare und schnell durchführbare Schaltvorgänge, durch die zudem die unsynchronisierten Schaltkupplungen (S1, S2) des Hauptgetriebes HG und die synchronisierten Schaltkupplungen (SP) der Bereichsgruppe GP sowie die zugeordneten Schaltsteller geschont und somit deren Lebensdauer erhöht wird.

### Bezugszeichen

- Br: Getriebebremse
- CT: Gruppengetriebe
- GP: Bereichsgruppe, Planetengruppe
- GV: Splitgruppe, Vorschaltgruppe
- G1: Erste Übersetzungsstufe von HG
- G2: Zweite Übersetzungsstufe von HG
- G3: Dritte Übersetzungsstufe von HG
- HG: Hauptgetriebe
- i: Übersetzung
- i_{GP}: Übersetzung von GP
- i_{HG}: Übersetzung von HG
- i_{HG_min}: Kleinste Übersetzung von HG
- K: Trennkupplung
- K1: Erste Eingangs-Übersetzungsstufe von GV
- K2: Zweite Eingangs-Übersetzungsstufe von GV
- L: Langsamfahrstufe von GP
- n: Drehzahl
- N: Neutralstellung
- n_{GA}: Drehzahl von W_{GA}
- n_{GE}: Drehzahl von W_{GE}
- n_{H}: Drehzahl von W_{H}
- n_{M}: Drehzahl des Antriebsmotors
- n_{VG}: Drehzahl von W_{VG1}
- PH: Hohlrad von GP
- PS: Sonnenrad von GP
- PT: Planetenträger von GP
- R: Rückwärts-Übersetzungsstufe von HG
- S: Schnellfahrstufe von GP
- SP: Schaltpaket von GP
- S1: Erstes Schaltpaket von HG
- S2: Zweites Schaltpaket von HG
- S1 - S5: Verfahrensschritte
- SV: Schaltpaket von GV
- t: Zeit
- t0 - t7: Zeitpunkte bei Bereichshochschaltung
- t0' - t8': Zeitpunkte bei Bereichsrückschaltung
- W: Getriebewelle
- W_{GA}: Ausgangswelle
- W_{GE}: Eingangswelle
- W_{H}: Hauptwelle
- W_{VG1}: Erste Vorgelegewelle von HG
- W_{VG2}: Zweite Vorgelegewelle von HG

## Patentansprüche

1. Verfahren zur Schaltsteuerung eines automatisierten Gruppengetriebes (CT), das in einem Antriebsstrang eines Kraftfahrzeugs zwischen einem Antriebsmotor oder einem Hybridantrieb sowie einem Achsantrieb angeordnet ist und mindestens ein mehrstufiges Hauptgetriebe (HG) sowie eine diesem nachgeschaltete Bereichsgruppe (GP) umfasst, und bei dem das Hauptgetriebe (HG) in Vorgelegebauweise mit mindestens einer mit einer steuerbaren Getriebebremse (Br) versehenen Vorgelegewelle (W_{VG1}) ausgeführt ist, die Eingangswelle (W_{GE}) über eine steuerbare Trennkupplung (K) mit dem Antriebsmotor oder dem Hybridantrieb in Verbindung steht, und das Hauptgetriebe (HG) unsynchronisiert sowie die Bereichsgruppe (GP) synchronisiert schaltbar ist, wobei bei einer Bereichsschaltung die in dem Hauptgetriebe (HG) vor und nach der Schaltung eingelegte Übersetzungsstufe (R) identisch ist, **dadurch gekennzeichnet, dass** während der Bereichsschaltung die in dem Hauptgetriebe (HG) eingelegte Übersetzungsstufe (R) eingelegt bleibt, und die Bereichsschaltung mit den folgenden Schritten durchgeführt wird:
S1) Lastabbau durch eine Drehmomentreduzierung des Antriebsmotors,
S2) Auslegen der Istübersetzungsstufe (L; S) der Bereichsgruppe (GP = N),
S3) Fremdsynchronisieren der Zielübersetzungsstufe (S; L) der Bereichsgruppe (GP),
S4) Einlegen der Zielübersetzungsstufe (S; L) der Bereichsgruppe (GP),
S5) Lastaufbau durch eine Drehmomenterhöhung des Antriebsmotors.

2. Verfahren nach Anspruch 1, **dadurch gekennzeichnet, dass** nach oder während der Drehmomentreduzierung des Antriebsmotors (S1) die Trennkupplung (K) zumindest teilsweise ausgerückt wird (0 ≤ K < 1).

3. Verfahren nach Anspruch 2, **dadurch gekennzeichnet, dass** bei zumindest teilsweise ausgerückter Trennkupplung (K) diese spätestens vor der Drehmomenterhöhung des Antriebsmotors (S5) vollständig eingedrückt wird (K = 1).

4. Verfahren nach einem der Ansprüche 1 bis 3, **dadurch gekennzeichnet, dass** die Fremdsynchronisierung (S3) der Zielübersetzungsstufe (S) der Bereichsgruppe (GP) bei einer Bereichshochschaltung mittels einer entsprechenden Bestätigung der Getriebebremse (Br > 0) erfolgt.

5. Verfahren nach einem der Ansprüche 1 bis 3, **dadurch gekennzeichnet, dass** die Fremdsynchronisierung (S3) der Zielübersetzungsstufe (L) der Bereichsgruppe (GP) bei einer Bereichsrückschaltung, bedarfsweise in Verbindung mit einem zumindest teilweisen Einrücken der Trennkupplung (0 < K ≤ 1), mittels einer entsprechenden Drehzahlführung des Antriebsmotors erfolgt.

6. Verfahren nach einem der Ansprüche 1 bis 5, **dadurch gekennzeichnet, dass** bei einer Bereichsschaltung, die eine Umschaltung einer dem Hauptgetriebe (HG) vor- oder nachgeschalteten synchronisiert schaltbaren Splitgruppe (GV) beinhaltet, die Umschaltung der Splitgruppe (GV) von der Istübersetzungsstufe (K1; K2) in die Zielübersetzungsstufe (K2; K1) unmittelbar nach dem Auslegen (S2) der Istübersetzungsstufe (L; S) der Bereichsgruppe (GP) erfolgt.

7. Verfahren nach einem der Ansprüche 1 bis 5, **dadurch gekennzeichnet, dass** bei einer Bereichshochschaltung, die eine Umschaltung einer dem Hauptgetriebe (HG) vor- oder nachgeschalteten synchronisiert schaltbaren Splitgruppe (GV) beinhaltet, die Istübersetzungsstufe (K1; K2) der Splitgruppe (GV) unmittelbar nach dem Auslegen (S2) der Istüberselzungsstufe (L; S) der Bereichsgruppe (GP) ausgelegt wird, und dass die Zielübersetzungsstufe (K2; K1) der Splitgruppe (GV), bedarfsweise in Verbindung mit einem unmittelbar vorhergehenden vollständigen Ausrücken der Trennkupplung (K = 0), und in Verbindung mit einem unmittelbar nachfolgenden vollständigen Einrücken der Trennkupplung (K = 1) vor der Drehmomenterhöhung des Antriebsmotors (S5) eingelegt wird.

8. Verfahren nach Anspruch 6 oder 7, **dadurch gekennzeichnet, dass** das Auslegen der Istübersetzungsstufe (K1; K2) der Splitgruppe (GV) zeitgleich mit dem Auslegen der Istübersetzungsstufe (L; S) der Bereichsgruppe (GP) erfolgt.

9. Verfahren zur Schaltsteuerung eines automatisierten Gruppengetriebes, das in einem Antriebsstrang zwischen einem Antriebsmotors oder einem Hybridantrieb sowie einem Achsantrieb angeordnet ist und mindestens eine mehrstufiges Hauptgetriebe (HG) sowie eine diesem nachgeschaltete Bereichsgruppe (GP) umfasst, und bei dem das Hauptgetriebe (HG) in Vorlegebausweise mit mindestens einer mit einer steuerbaren Getriebebremse (Br) versehenen Vorgelegewelle (W_{VG1}) ausgeführt ist, die Eingangswelle (W_{GE}) über eine steuerbare Trennkupplung (K) mit dem Antriebsmotor oder dem Hybridantrieb in Verbindung steht, und das Hauptgetriebe (HG) unsynchronisiert und die Bereichsgruppe (GP) synchronisiert schaltbar ist, wobei bei einer Bereichsschaltung die in dem Hauptgetriebe (HG) vor und nach der Schaltung eingelegte Übersetzungsstufe identisch ist, wobei die Bereichschaltung dadurch ausgeführt wird, dass zuerst ein Lastabbau durch eine Drehmomentreduzierung des Antriebsmotors erfolgt, anschließend ein Auslegen der Istübersetzungsstufe der Bereichsgruppe (GP) erfolgt, darauffolgend ein Fremdsynchronisieren der Zielübersetzungsstufe der Bereichsgruppe (GP) erfolgt, anschließend ein Einlegen der Zielübersetzungsstufe der Bereichsgruppe (GP) erfolgt, und letztendlich ein Lastaufbau durch eine Drehmomenterhöhung des Antriebsmotors erfolgt, und wobei zumindest während des Lastabbaus, des Auslegens der Istübersetzungsstufe und des Fremdsynchronisierens der Zielübersetzungsstufe der Bereichsgruppe (GP) im Hauptgetriebe (HG) die Übersetzungsstufe eingelegt bleibt, **dadurch gekennzeichnet, dass** zum Fremdsynchronisieren der Zielübersetzungsstufe für die Zieldrehzahl der Zielübersetzungsstufe ein Offsetwert vorgegeben wird, um den die Zieldrehzahl korrigiert wird.

10. Verfahren nach Anspruch 9, **dadurch gekennzeichnet, dass** zum Fremdsynchronisieren der Zielübersetzungsstufe die Zieldrehzahl der Zielübersetzungsstufe durch den Offsetwert derart korrigiert wird, dass beim Fremdsynchronisieren eine Sperrwirkung gegeben ist.

11. Verfahren nach Anspruch 10, dadurch gekennzeichet, dass hierzu bei einer Hochschaltung in Rückwärtsfahrt ein negativer Offsetwert vorgegeben wird, sodass die Zieldrehzahl verringert wird und bei einer Hochschaltung in Vorwärtsfahrt ein positiver Offsetwert vorgegeben wird, sodass die Zieldrehzahl vergrößert wird.

12. Verfahren nach Anspruch 11, **dadurch gekennzeichnet, dass** hierzu bei einer Hochschaltung das Fremdsynchronisieren über die Getriebebremse (Br) erfolgt.

13. Verfahren nach Anspruche 10, **dadurch gekennzeichnet, dass** hierzu bei einer Rückschaltung in Rückwärtsfahrt ein positiver Offsetwert vorgegeben wird, sodass die Zieldrehzahl vergrößert wird und bei einer Rückschaltung in Vorwärtsfahrt ein negativer Offsetwert vorgegeben wird, sodass die Zieldrehzahl verringert wird.

14. Verfahren nach Anspruch 13, **dadurch gekennzeichnet, dass** hierzu bei einer Rückschaltung das Fremdsynchronisieren über den Antriebsmotor erfolgt.

15. Verfahren nach Anspruch 1, dadurch gekennzeichet, dass zum Fremdsynchronisieren der Zielübersetzungsstufe die Zieldrehzahl der Zielübersetzungsstufe durch den Offsetwert derart korrigiert wird, dass beim Fremdsynchronisieren keine Sperrwirkung gegeben ist.

16. Verfahren nach einem der Ansprüche 9 bis 15, **dadurch gekennzeichnet, dass** während des Lastabbaus, des Auslegens der Istübersetzungsstufe, des Fremdsynchronisierens der Zielübersetzungsstufe, des Einlegens der Zielübersetzungsstufe und des Lastaufbaus der Bereichschaltung im Hauptgetriebe (HG) die Übersetzungsstufe eingelegt bleibt, wobei eine Splitt-, gruppe (GV), die dem Hauptgetriebe (HG) vorgeschaltet ist, kurz vor und/oder während des Einlegens der Zielübersetzungsstufe der Bereichschaltung ausgelegt und nach dem Einlegen der Zielübersetzungsstufe wieder eingelegt wird.

17. Verfahren nach einem der Ansprüche 9 bis 15, **dadurch gekennzeichnet, dass** während des Lastabbaus, des Auslegens der Istübersetzungsstufe und des Fremdsynchronisierens der Zielübersetzungsstufe der Bereichschaltung im Hauptgetriebe (HG) die Übersetzungsstufe eingelegt bleibt, wobei das Hauptgetriebe (HG) kurz vor und/oder während des Einlegens der Zielübersetzungsstufe der Bereichschaltung ausgelegt und nach dem Einlegen der Zielübersetzungsstufe wieder eingelegt wird.

## Claims

1. Method for controlling the shifting of an automated group transmission (CT) which is arranged in a drive train of a motor vehicle between a drive engine or a hybrid drive and an axle drive, and comprises at least one multi-stage main transmission (HG) as well as a range change group (GP) which is connected downstream thereof, and in which the main transmission (HG) is embodied as a layshaft design with at least one layshaft (W_{VG1}) which is provided with a controllable transmission brake (Br), the input shaft (W_{GE}) is connected to the drive engine or the hybrid drive via a controllable clutch (K), and the main transmission (HG) can be shifted in an unsynchronized fashion, and the range change group (GP) can be shifted in a synchronized fashion, wherein in the case of a range change shifting process the transmission stage (R) which is engaged in the main transmission (HG) before the shifting process and the transmission stage (R) which is engaged in the main transmission (HG) after the shifting process are identical, **characterized in that** during the range change shifting process the transmission stage (R) which is engaged in the main transmission (HG) remains engaged and the range change shifting process is carried out with the following steps:
S1) decreasing the load by reducing the torque of the drive engine,
S2) disengaging the actual transmission stage (L; S) of the range change group (GP = N),
S3) performing external synchronization of the target transmission stage (S; L) of the range change group (GP),
S4) engaging the target transmission stage (S; L) of the range change group (GP),
S5) increasing the load by increasing the torque of the drive engine.

2. Method according to Claim 1, **characterized in that** after or during the reduction of the torque of the drive engine (S1) the clutch (K) is at least partially disengaged (0 ≤ K < 1).

3. Method according to Claim 2, **characterized in that** in the case of an at least partially disengaged clutch (K) the latter is completely engaged (K = 1) at the latest before the increasing of the torque of the drive engine (S5).

4. Method according to one of Claims 1 to 3, **characterized in that** the external synchronization (S3) of the target transmission stage (S) of the range change group (GP) takes place in the case of a range change shifting-up process by means of corresponding activation of the transmission brake (Br > 0).

5. Method according to one of Claims 1 to 3, **characterized in that** the external synchronization (S3) of the target transmission stage (L) of the range change group (GP) takes place in the case of a range change shifting-down process, if necessary in conjunction with at least partial engagement of the clutch (0 < K ≤1), by means of corresponding adjustment of the rotational speed of the drive engine.

6. Method according to one of Claims 1 to 5, **characterized in that** in the case of a range change shifting process which includes shifting a split group (GV) which can be shifted in a synchronized fashion and which is arranged upstream or downstream of the main transmission (HG), the shifting of the split group (GV) from the actual transmission stage (K1; K2) into the target transmission stage (K2; K1) takes place directly after the disengagement (S2) of the actual transmission stage (L; S) of the range change group (GP).

7. Method according to one of Claims 1 to 5, **characterized in that** in the case of a range change shifting-up process which includes shifting a split group (GV) which can be shifted in a synchronized fashion and which is arranged upstream or downstream of the main transmission (HG), the actual transmission stage (K1; K2) of the split group (GV) is disengaged directly after the disengagement (S2) of the actual transmission stage (L; S) of the range change group (GP), and **in that** the target transmission stage (K2; K1) of the split group (GV) is engaged, if necessary in conjunction with directly preceding complete disengagement of the clutch (K = 0) and in conjunction with directly following complete engagement of the clutch (K = 1) before the increasing of the torque of the drive engine (S5).

8. Method according to Claim 6 or 7, **characterized in that** the disengagement of the actual transmission stage (K1; K2) of the split group (GV) takes place simultaneously with the engagement of the actual transmission stage (L; S) of the range change group (GP).

9. Method for controlling the shifting of an automated group transmission which is arranged in a drive train between a drive engine or a hybrid drive and an axle drive, and comprises at least one multi-stage main transmission (HG) as well as a range change group (GP) which is connected downstream thereof, and in which the main transmission (HG) is embodied as a layshaft design with at least one layshaft (W_{VG1}) which is provided with a controllable transmission brake (Br), the input shaft (W_{GE}) is connected to the drive engine or the hybrid drive via a controllable clutch (K), and the main transmission (HG) can be shifted in an unsynchronized fashion, and the range change group (GP) can be shifted in a synchronized fashion, wherein in the case of a range change shifting process the transmission stage which is engaged in the main transmission (HG) before the shifting process and the transmission stage which is engaged in the main transmission (HG) after the shifting process are identical, wherein the range change shifting process is carried out in such a way that firstly decreasing of the load takes place by reducing the torque of the drive engine, subsequently disengagement of the actual transmission stage of the range change group (GP) takes place, and then external synchronization of the target transmission stage of the range change group (GP) takes place, subsequently engagement of the target transmission stage of the range change group (GP) takes place and ultimately increasing of the load takes place by increasing the torque of the drive engine and wherein the transmission stage remains engaged at least during the decreasing of the load, the disengagement of the actual transmission stage and the external synchronization of the target transmission stage of the range change group (GP) in the main transmission (HG), **characterized in that** for the external synchronization of the target transmission stage an offset value is predefined for the target rotational speed of the target transmission stage, by which offset value the target rotational speed is corrected.

10. Method according to Claim 9, **characterized in that** in order to perform external synchronization of the target transmission stage the target rotational speed of the target transmission stage is corrected by means of the offset value in such a way that a blocking effect occurs during the external synchronization.

11. Method according to Claim 10, **characterized in that** for this purpose in the case of shifting-up during reverse travel in a negative offset value is predefined with the result that the target rotational speed is reduced, and in the case of shifting-up during forward travel a positive offset value is predefined with the result that the target rotational speed is increased.

12. Method according to Claim 11, **characterized in that** for this purpose in the case of shifting-up the external synchronization takes place via the transmission brake (Br).

13. Method according to Claim 10, **characterized in that** for this purpose in the case of shifting-down during reverse travel a positive offset value is predefined with the result that the target rotational speed is increased, and in the case of shifting-down during forward travel a negative offset value is predefined with the result that target rotational speed is reduced.

14. Method according to Claim 13, **characterized in that** for this purpose in the case of shifting-down the external synchronization takes place via the drive engine.

15. Method according to Claim 1, **characterized in that** in order to perform external synchronization of the target transmission stage the target rotational speed of the target transmission stage is corrected by means of the offset value in such a way that no blocking effect occurs during the external synchronization.

16. Method according to one of Claims 9 to 15, **characterized in that** during the decreasing of the load, the disengagement of the actual transmission stage, the external synchronization of the target transmission stage, the engagement of the target transmission stage and the increasing of the load of the range change shifting process the transmission stage remains engaged in the main transmission (HG), wherein a split group (GV), which is arranged upstream of the main transmission (HG), is disengaged briefly before and/or during the engagement of the target transmission stage of the range change shifting process and is engaged again after the engagement of the target transmission stage.

17. Method according to one of Claims 9 to 15, **characterized in that** during the decreasing of the load, the disengagement of the actual transmission stage and the external synchronization of the target transmission stage of the range change shifting process the transmission stage remains engaged in the main transmission (HG) wherein the main transmission (HG) is disengaged briefly before and/or during the engagement of the target transmission stage of the range change shifting process and is engaged again after the engagement of the target transmission stage.

## Revendications

1. Procédé de commande de changement de vitesses d'une boîte de vitesses à plusieurs groupes automatisée (CT), qui est disposée dans une chaîne de transmission d'un véhicule automobile entre un moteur d'entraînement ou un entraînement hybride et un entraînement d'essieu et qui comprend au moins une boîte de vitesses principale à plusieurs étages (HG) et un groupe-relais (GP) monté en aval de celle-ci, la boîte de vitesses principale (HG) étant réalisée suivant une construction intermédiaire avec au moins un arbre intermédiaire (W_{VG1}) pourvu d'un frein de boîte de vitesses commandable (Br), l'arbre d'entrée (W_{GE}) étant en liaison avec le moteur d'entraînement ou l'entraînement hybride par le biais d'un embrayage de coupure commandable (K), et la boîte de vitesses principale (HG) pouvant être commutée de manière non synchronisée et le groupe-relais (GP) pouvant être commuté de manière synchronisée, dans lequel, lors d'un changement de vitesse relais, l'étage de réduction (R) enclenché dans la boîte de vitesses principale (HG) avant et après le changement de vitesse est le même, **caractérisé en ce que** pendant le changement de vitesse relais, l'étage de réduction (R) enclenché dans la boîte de vitesses principale (HG) reste enclenché, et le changement de vitesse relais est réalisé avec les étapes suivantes :
S1) Diminution de charge par une réduction du couple du moteur d'entraînement,
S2) Désengagement de l'étage de réduction actuel (L ; S) du groupe-relais (GP=N),
S3) Synchronisation extérieure de l'étage de réduction cible (S ; L) du groupe-relais (GP),
S4) Enclenchement de l'étage de réduction cible (S ; L) du groupe-relais (GP),
S5) Augmentation de charge par une augmentation du couple du moteur d'entraînement.

2. Procédé selon la revendication 1, **caractérisé en ce qu'**après ou pendant la réduction de couple du moteur d'entraînement (S1), l'embrayage de coupure (K) est au moins en partie débrayé (0 ≤ K < 1).

3. Procédé selon la revendication 2, **caractérisé en ce que** lorsque l'embrayage de coupure (K) est au moins en partie débrayé, celui-ci est complètement embrayé (K=1) au plus tard avant l'augmentation du couple du moteur d'entraînement (S5).

4. Procédé selon l'une quelconque des revendications 1 à 3, **caractérisé en ce que** la synchronisation extérieure (S3) de l'étage de réduction cible (S) du groupe-relais (GP) a lieu lors d'un changement de vitesse relais vers une vitesse supérieure au moyen d'un actionnement correspondant du frein de boîte de vitesses (Br > 0).

5. Procédé selon l'une quelconque des revendications 1 à 3, **caractérisé en ce que** la synchronisation extérieure (S3) de l'étage de réduction cible (L) du groupe-relais (GP) a lieu lors d'un changement de vitesse relais vers une vitesse inférieure, au besoin en liaison avec un embrayage au moins partiel de l'embrayage de coupure (0 < K ≤ 1), au moyen d'une commande de régime correspondante du moteur d'entraînement.

6. Procédé selon l'une quelconque des revendications 1 à 5, **caractérisé en ce que** dans le cas d'un changement de vitesse relais qui contient une commutation d'un groupe de coupure (GV) commutable de manière synchronisée monté en aval ou en amont de la boîte de vitesses principale (HG), la commutation du groupe de coupure (GV) de l'étage de réduction actuel (K1 ; K2) à l'étage de réduction cible (K2 ; K1) se produit directement après le désengagement (S2) de l'étage de réduction actuel (L ; S) du groupe-relais (GP).

7. Procédé selon l'une quelconque des revendications 1 à 5, **caractérisé en ce que** dans le cas d'un changement de vitesse relais vers une vitesse supérieure, qui contient une commutation d'un groupe de coupure (GV) commutable de manière synchronisée monté en aval ou en amont de la boîte de vitesses principale (HG), l'étage de réduction actuel (K1 ; K2) du groupe de coupure (GV) est désengagé immédiatement après le désengagement (S2) de l'étage de réduction actuel (L ; S) du groupe-relais (GP), et **en ce que** l'étage de réduction cible (K2 ; K1) du groupe de coupure (GV), au besoin en liaison avec un débrayage complet immédiatement précédent de l'embrayage de coupure (K=0), et en liaison avec un embrayage complet immédiatement suivant de l'embrayage de coupure (K=1), est enclenché avant l'augmentation du couple du moteur d'entraînement (S5).

8. Procédé selon la revendication 6 ou 7, **caractérisé en ce que** le désengagement de l'étage de réduction actuel (K1 ; K2) du groupe de coupure (GV) s'effectue simultanément au désengagement de l'étage de réduction actuel (L ; S) du groupe-relais (GP).

9. Procédé de commande de changement de vitesses d'une boîte de vitesses à plusieurs groupes automatisée, qui est disposée dans une chaîne de transmission entre un moteur d'entraînement ou un entraînement hybride et un entraînement d'essieu et qui comprend au moins une boîte de vitesses principale à plusieurs étages (HG) et un groupe-relais (GP) monté en aval de celle-ci, la boîte de vitesses principale (HG) étant réalisée suivant une construction intermédiaire avec au moins un arbre intermédiaire (W_{VG1}) pourvu d'un frein de boîte de vitesses commandable (Br), l'arbre d'entrée (W_{GE}) étant en liaison avec le moteur d'entraînement ou l'entraînement hybride par le biais d'un embrayage de coupure commandable (K), et la boîte de vitesses principale (HG) pouvant être commutée de manière non synchronisée et le groupe-relais (GP) pouvant être commuté de manière synchronisée, dans lequel, lors d'un changement de vitesse relais, l'étage de réduction enclenché dans la boîte de vitesses principale (HG) avant et après le changement de vitesse est le même, le changement de vitesse relais étant réalisé par le fait que tout d'abord une diminution de charge se produit par une réduction du couple du moteur d'entraînement, puis un désengagement de l'étage de réduction actuel du groupe-relais (GP) a lieu, ensuite une synchronisation extérieure de l'étage de réduction cible du groupe-relais (GP) a lieu, puis un enclenchement de l'étage de réduction cible du groupe-relais (GP) a lieu, et finalement une augmentation de charge se produit par une augmentation du couple du moteur d'entraînement, et dans lequel au moins pendant la diminution de charge, le désengagement de l'étage de réduction actuel et la synchronisation extérieure de l'étage de réduction cible du groupe-relais (GP) dans la boîte de vitesses principale (HG), l'étage de réduction reste enclenché, **caractérisé en ce que** pour la synchronisation extérieure de l'étage de réduction cible, on prédéfinit pour le régime cible de l'étage de réduction cible une valeur de décalage avec laquelle le régime cible est corrigé.

10. Procédé selon la revendication 9, **caractérisé en ce que** pour la synchronisation extérieure de l'étage de réduction cible, le régime cible de l'étage de réduction cible est corrigé par la valeur de décalage de telle sorte qu'un effet de blocage se produise lors de la synchronisation extérieure.

11. Procédé selon la revendication 10, **caractérisé en ce qu'**à cet effet, lors d'un changement de vitesse vers une vitesse supérieure en conduite en marche arrière, une valeur de décalage négative est prédéfinie, de telle sorte que le régime cible soit réduit, et en cas de changement de vitesse vers une vitesse supérieure en conduite en marche avant, une valeur de décalage positive est prédéfinie, de telle sorte que le régime cible soit augmenté.

12. Procédé selon la revendication 11, **caractérisé en ce qu'**à cet effet la synchronisation extérieure a lieu lors d'un changement de vitesse vers une vitesse supérieure par le biais du frein de boîte de vitesses (Br).

13. Procédé selon la revendication 10, **caractérisé en ce qu'**à cet effet, dans le cas d'un changement de vitesse vers une vitesse inférieure en conduite en marche arrière, une valeur de décalage positive est prédéfinie, de telle sorte que le régime cible est augmenté, et dans le cas d'un changement de vitesse vers une vitesse inférieure en conduite en marche avant, une valeur de décalage négative est prédéfinie, de sorte que le régime cible soit réduit.

14. Procédé selon la revendication 13, **caractérisé en ce qu'**à cet effet, la synchronisation extérieure a lieu lors d'un changement de vitesse vers une vitesse inférieure par le biais du moteur d'entraînement.

15. Procédé selon la revendication 1, **caractérisé en ce que** pour la synchronisation extérieure de l'étage de réduction cible, le régime cible de l'étage de réduction cible est corrigé par la valeur de décalage de telle sorte que lors de la synchronisation extérieure, aucun effet de blocage ne se produise.

16. Procédé selon l'une quelconque des revendications 9 à 15, **caractérisé en ce que** pendant la diminution de charge, le désengagement de l'étage de réduction actuel, la synchronisation extérieure de l'étage de réduction cible, l'enclenchement de l'étage de réduction cible, et l'augmentation de charge du changement de vitesse relais dans la boîte de vitesses principale (HG), l'étage de réduction reste enclenché, un groupe de coupure (GV), qui est monté en amont de la boîte de vitesses principale (HG), étant désengagé brièvement avant et/ou pendant l'enclenchement de l'étage de réduction cible du changement de vitesse relais, et étant à nouveau enclenché après l'enclenchement de l'étage de réduction cible.

17. Procédé selon l'une quelconque des revendications 9 à 15, **caractérisé en ce que** pendant la diminution de charge, le désengagement de l'étage de réduction actuel et la synchronisation extérieure de l'étage de réduction cible du changement de vitesse relais dans la boîte de vitesses principale (HG), l'étage de réduction reste enclenché, la boîte de vitesses principale (HG) étant désengagée brièvement avant et/ou pendant l'enclenchement de l'étage de réduction cible du changement de vitesse relais et étant à nouveau enclenchée après l'enclenchement de l'étage de réduction cible.
